## Europäisches Patentamt
## European Patent Office
## Office européen des brevets

(19)

(11) Veröffentlichungsnummer: **0 139 149**
**B1**

(12) **EUROPÄISCHE PATENTSCHRIFT**

(45) Veröffentlichungstag der Patentschrift: **13.06.90**

(51) Int. Cl.⁵: **F 16 K 31/124**

(21) Anmeldenummer: **84109835.3**

(22) Anmeldetag: **17.08.84**

(54) **Modulierendes, druckbetätigtes Servo-Überdruckventil.**

(30) Priorität: **22.09.83 US 534594**

(43) Veröffentlichungstag der Anmeldung: **02.05.85 Patentblatt 85/18**

(45) Bekanntmachung des Hinweises auf die Patenterteilung: **13.06.90 Patentblatt 90/24**

(84) Benannte Vertragsstaaten: **DE FR GB SE**

(56) Entgegenhaltungen:
CH-A- 586 364
CH-A- 588 656
US-A-4 291 721
US-A-4 355 657
US-A-4 402 341

(73) Patentinhaber: **DRESSER INDUSTRIES INC.**
**1600 Pacific Avenue**
**Dallas Texas 75201 (US)**

(72) Erfinder: **Reip, Raymond G.**
**18 Stonehearth Lane Indian Head Park**
**Illinois 60525 (US)**

(74) Vertreter: **Patentanwälte Grünecker, Kinkeldey, Stockmair & Partner**
**Maximilianstrasse 58**
**D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung bezieht sich auf Überdruckventil mit Servobetätigung umfassend ein Hauptventil mit einem einen Einlaß und einen Auslaß aufweisenden Gehäuse, einer in dem Gehäuse gebildeten Kammer und einem zwischen Einlaß und Auslaß verschieblich in der Kammer geführten Kolben zum Steuern der Strömung vom Einlaß zum Auslaß, ein Servoventil mit einer Kolbenkammer und einem verschieblich in dieser geführten federgestützen Differential-Servolben, eine die Kolbenkammer mit der Kammer des Hauptventils verbindenden Leitung, eine ein erstes Ende des Servokolbens drucküberträgend mit dem Einlaß des Hauptventils verbindende zweite Leitung.

Ein solches servobetätigtes Überdruckventil ist bereits aus der US—PS 44 02 341 bekannt.

Solche Überdruckventile sind an Druckbehältern vorgesehen, um das in dem Behälter unter Druck stehende Produkt bei Überschreiten eines vorbestimmten Grenzdruckes ablassen zu können, da anderenfalls eine gefährliche Situation eintreten kann.

Frühere Sicherheitsventile besaßen ein Absperrglied, welches über eine Feder in Anlage an einen Sitz belastet ist. Übersteigt der Druck des Produkts einen vorbestimmten Sicherheitswert, wird die auf das Absperrglied wirkende Kraft stärker als die von der Feder ausgeübte Belastung, so daß das Absperrglied vom Sitz abgehoben wird und das Produkt entweichen kann. Darartige Ventile sind unzuverlässig und unterliegen starkem Verschleiß aufgrund des wiederholten Aufsetzens des Absperrglieds auf seinem Sitz.

Derzeit gebräuchliche servobetätigte Überdruckventile arbeiten in der Weise, daß eine gewisse Menge des Produkts kontinuierlich über das Hauptventil entweicht, was zu beträchtlichen Verlusten des Produkts führt. Der kontinuierliche Strom des Produkts durch das Servoventil hindurch erhöht zudem die Gefahr, daß das Servoventil durch im Produkt mitgeführte Verunreinigungen verstopft werden kann.

Ferner ist ein Sicherheitsventil für einen Druckbehälter in der US—PS 42 91 721 beschrieben. Dieses Ventil hat zwar eine modulierende Wirkung weist aber einen komplizierten Aufbau auf, so daß die Gefahr besteht, daß die in enger Gleitpassung zusammenwirkenden Teile des Ventils hängenbleiben.

Es ist daher Aufgabe der vorliegenden Erfindung, ein servobetätigtes Überdruckventil der eingangs genannten Art so zu verbessern, daß ohne kontinuierliche Durchströmung des Servoventils ein moduliertes Ablassen eines Überdrucks durch das Hauptventil möglich ist.

Diese Aufgabe wird erfindungsgemäß gelöst durch ein in dem Servoventil angeordneten Einlaßventil, eine das Einlaßventil drucküberträgend mit Einlaß des Hauptventils verbindende dritte Leitung, ein für die drucküberträgende Verbindung des Einlaßventiles mit der Kolbenkammer betätigbare Ventilstössel, ein am Servokolben angeordnetes Betätigungsglied zum Betätigen des Einlaßventils über den Ventilstössel, und durch ein Ablaßventil in der Kolbenkammer, welches einen mit einem Auslaß strömungsverbundenen Durchlaß und ein an den Servokolben angrenzendes Absperrglied umfaßt, das beweglich in dem Ablaßventil angeordnet und durch den Servokolben in Öffnungsrichtung betätigbar ist, wobei das Absperrglied durch eine Federeinrichtung in seine Schließstellung belastet ist.

Kurz gesagt richtet sich die Erfindung auf ein neuertiges und verbessertes, druckbetätigtes und über ein Servoventil gesteuertes Überdruckventil für die kontinuierliche Modulation der Strömung eines unter Druck stehenden Produkts aus einem Behälter. Das Servoventil steht in Strömungsverbindung mit einem unter Druckausgleich stehenden Hauptventil, welches ein bewegliches Absperrglied und oberhalb desselben einen druckgespeisten Kopfraum aufweist. Das Servoventil enthält eine Servokolbenkammer und einen verschieblich in dieser gelagerten Differential-Servokolben. Die Kammer steht in Strömungsverbindung mit dem Kopfraum, so daß der in diesem herrschende Druck den Servokolben beaufschlagt und ihn aufgrund seiner unterschiedlich großen druckbeaufschlagten Flächen in eine bestimmte Richtung belastet. Der Druck des Produkts steht an einem Einlaßventil an, welches durch den Servokolben betätigbar ist, um den Zutritt des Druck zu der Kammer freizugeben. Die Servokolbenkammer ist über ein durch den Servokolben betätigbares Druckentlastungsventil mit dem Auslaß des Hauptventils in Strömungsverbindung bringbar.

Ein der beschriebenen Anordnung zugeordnetes Prüfventil hat einen Einlaß, an welchen ein Prüfdruck anlegbar ist. Mit dem Prüfdruckeinlaß des Prüfventils steht ein erster Auslaß des Prüfventils in Strömungsverbindung. Die Strömung zwischen dem Einlaß und dem ersten Auslaß ist durch ein dazwischen angeordnetes Ventil steherbar. Ferner ist ein Entlastungsdurchlaß vorgesehen, dessen Durchströmung durch das erwähnte Ventil steuerbar ist. Das Prüfventil hat einen zweiten Auslaß, welcher mit dem Prüfdruckeinlaß strömungsverbunden und von dem Druck des Produkts beaufschlagt ist. Die Strömungsverbindung zwischen dem Prüfdruckeinlaß und dem zweiten Auslaß ist durch ein dazwischen angeordnetes Umschaltventil gesteuert. Ein dem Servokolben zugeordnetes Kopfteil ist durch die gleiche Feder belastet wie der Servokolben, kann sich jedoch unabhängig von diesem bewegen, um das Hauptventil in der Funktion einer Hilfs- oder Notbetätigung öffnend zu betätigen.

Weitere vorteilhafte Ausgestaltungen der Erfindung ergeben sich aus den übrigen Unteransprüchen.

Im folgenden sind Ausführungsbeispiele der Erfindung anhand der Zeichnung erläutert. Es zeigen:

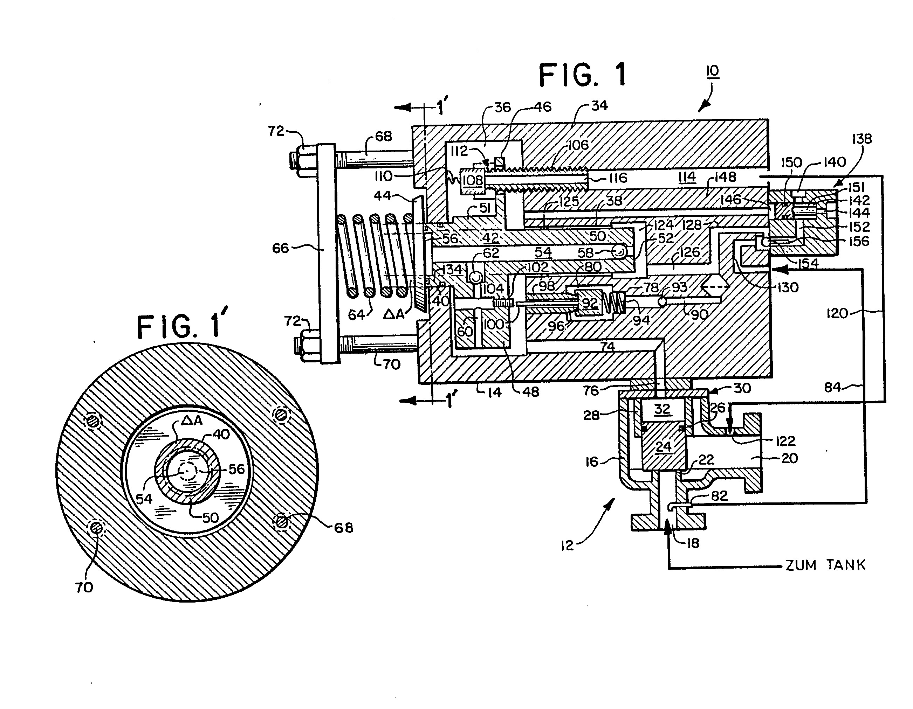

Fig. 1 eine schematisierte Darstellung eines modulierenden, druckbetätigten und über ein Servoventil gesteherten Überdruckventils in einer Ausführungsform der Erfindung,

Fig. 1' eine Ansicht im Schnitt entlang der Linie 1'-1' in Fig. 1,

Fig. 2 eine Fig. 1 entsprechende Darstellung eines servogesteuerten Überdruckventils in einer zweiten Ausführungsform der Erfindung,

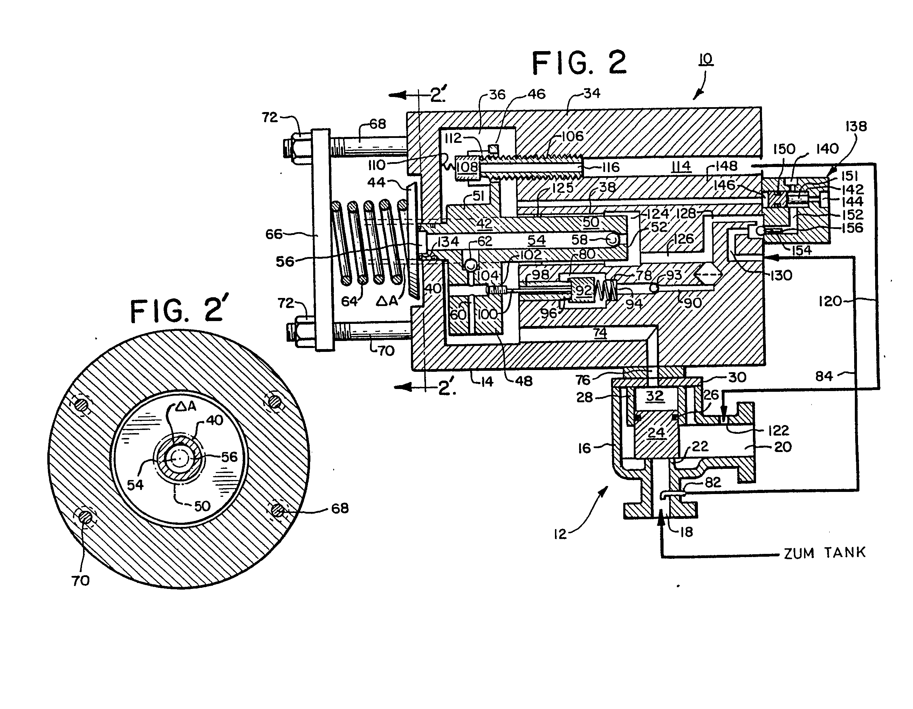

Fig. 2' eine Ansicht im Schnitt entlang der Linie 2'-2' in Fig. 2,

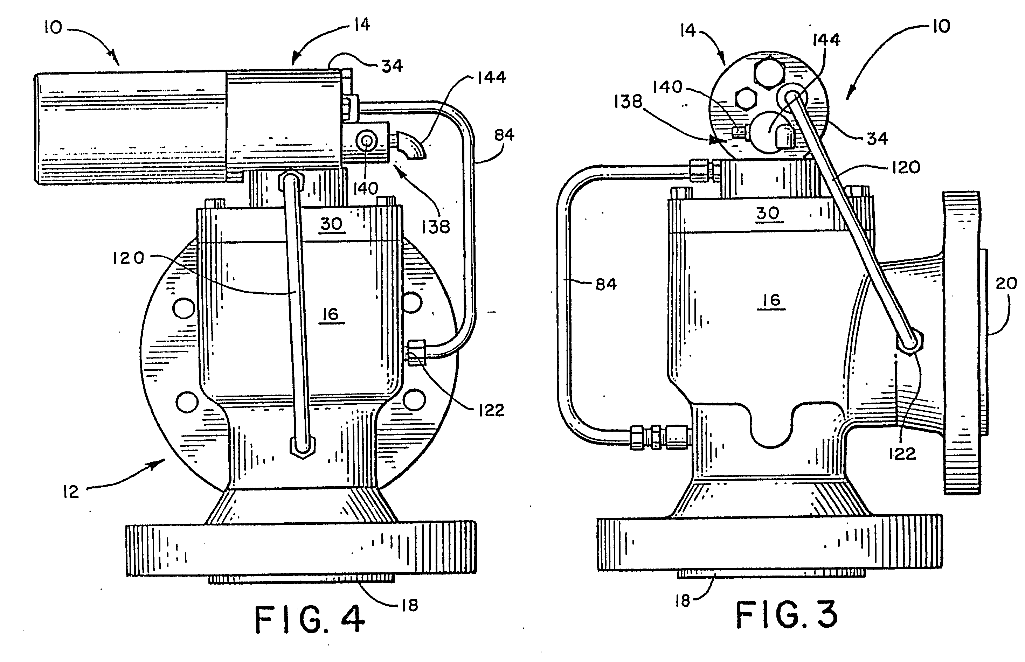

Fig. 3 eine Gesamtansicht eines Überdruck-Hauptventils und eines dazugehörigen Servoventils,

Fig. 4 eine um 90° verdrehte Gesamtansicht der Anordnung nach Fig. 3,

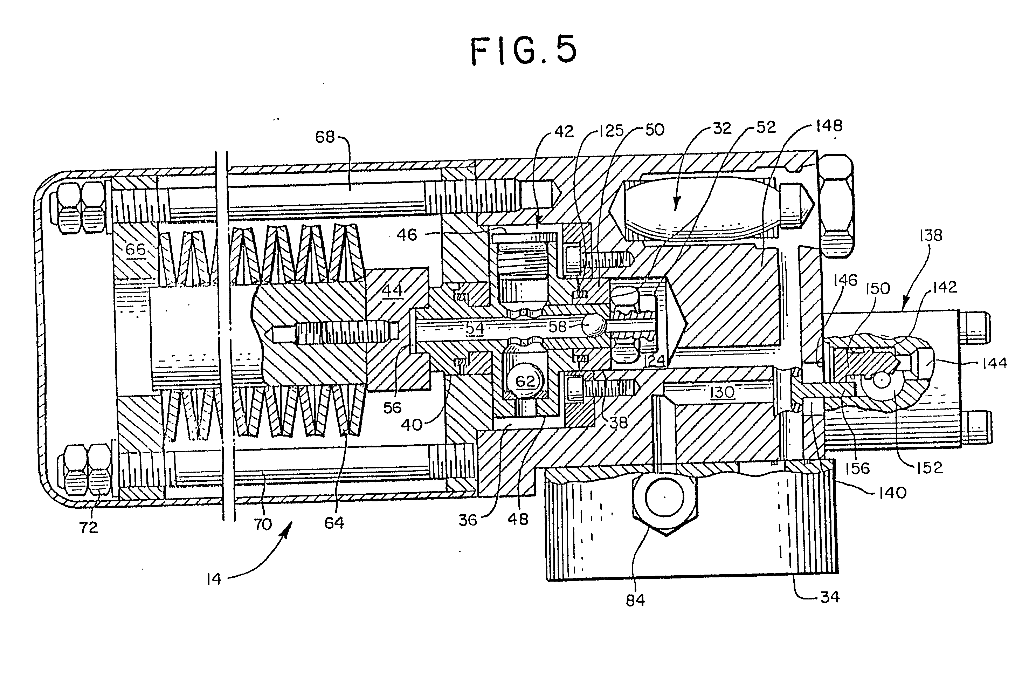

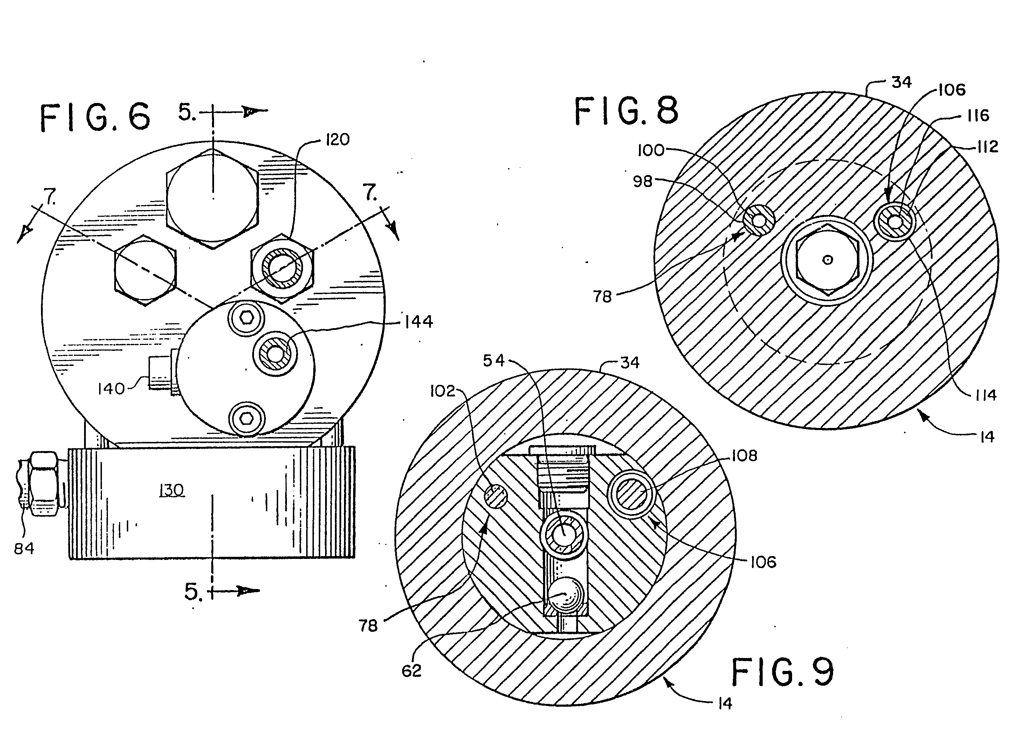

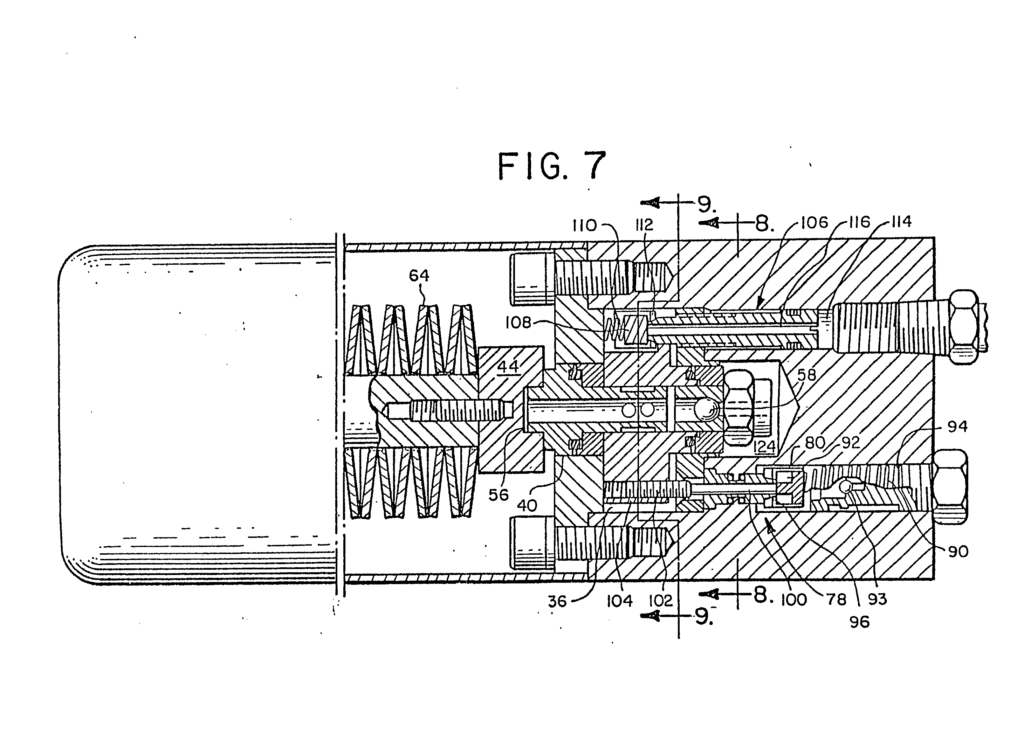

Fig. 5 eine Ansicht eines Servoventils im Schnitt entlang der Linie 5-5 in Fig. 6,

Fig. 6 eine Stirnansicht des Servoventils in einer weiteren Ausführungsform der Erfindung,

Fig. 7 eine Ansicht im abgewinkelten Schnitt entlang den Linien 7-7 in Fig. 6,

Fig. 8 eine Ansicht im Schnitt entlang der Linie 8-8 in Fig. 7 und

Fig. 9 eine Ansicht im Schnitt entlang der Linie 9-9 in Fig. 7.

Eine in Fig. 1 insgesamt mit 10 bezeichnete Ventilanordnung umfaßt ein Hauptventil 12 und ein druckbetätigtes Servoventil 14. Das Servoventil 14 dient der Steuerung des Hauptventils 12 für die proportional modulierte Druckentlastung eines ein unter Druck stehendes Produkt enthaltenden Druckbehälters od. dergl.

Das Hauptventil 12 hat ein Gehäuse 16, welches mit einem ein unter Druckstehendes Produkt enthaltenden (nicht gezeigten) Druckbehälter strömungsverbunden ist. Ferner hat das Hauptventil 12 einen Auslaß 20 für den Druckablaß aus dem Druckbehälter ins Freie oder in einen Überlaufbehälter. Zwischen einem Einlaß 18 und dem Auslaß 20 enthält das Hauptventil 12 einen Ventilsitz 22 für ein bewegliches Absperrglied 24. Dieses ist unter Abdichtung mittels einer Dichtung 26 in einer sich von einer oberen Wand 30 des Hauptventils 12 abwärts erstreckenden Buchse 26 geführt. Die Dichtung 26 erlaubt eine Hin- und Herbewegung des Absperrglieds 24 relativ zu seinem Sitz 22. Innerhalb der Buchse 28 ist oberhalb des Absperrglieds 24 ein Kopfraum 32 vorhanden. Ein im Kopfraum 32 herrschender Druck belastet das Absperrglied 24 in Anlage an seinem Sitz 22. Ist der im Kopfraum 32 herrschende Druck wesentlich geringer als der am Einlaß 18 anstehende Druck des Produkts, dann wird das Absperrglied 24 durch den letzteren von seinem Sitz 22 abgehoben, so daß das Produkt vom Einlaß 18 zum Auslaß 20 strömen kann.

Das Servoventil 14 hat ein Gehäuse 34, in welchem eine Kammer 36 größeren Durchmessers und eine Kammer 38 kleineren Durchmessers ausgebildet sind. Eine im Gehäuse 34 geformte Öffnung 40 ist von einem Differentiel-Servokolben 42 durchsetzt. Dieser hat ein Kopfteil 44, eine erste quer verlaufende Fläche 46, eine zweite quer verlaufende Fläche 48 und einen Körper 50 verringerten Durchmessers mit einer Endfläche 52. Das Kopfteil 44 und der Kolben 42 sind durch eine Feder 64 mit einer einstellbaren Gegendruckkraft belastet. Durch Einstellen der Kompression der Feder 64 mittels einer Anordnung von Einstellelementen 66, 68, 70, 72 läßt sich der Druck einstellen, bei welchem eine Verschiebung des Kolbens 42 nach links in Fig. 1 eintritt.

Der einen kleineren Druchmesser aufweisende Körper 50 erstreckt sich von der Endfläche 52 zu einer ersten Seite der Flächen 46 und 48. Das Servoventil 14 enthält eine einen verringerten Durchmesser aufwiesende Kammer 124. Eine Dichtung 125 trennt die Kammer 124 von der Kammer 36. Der Kolben 42 steht durch die Bohrung 40 nach außen hervor und erstreckt sich durch die Bohrung 38 bis in die Kammer 124.

Bei der in Fig. 1 und 1' dargestellten modulierenden Ausführungsform des Ventils 10 hat die Bohrung 40 einen größeren Durchmesser als die Bohrung 38, mit dem Ergebnis, daß der in der Kammer 36 herrschende Druck eine der von der Feder 64 ausgeübten Belastung entgegenwirkende, nach links gerichtete Kraft erzeugt; die Kolbenfläche rechts ist einen Betrag ΔA grösser als die Kolbenfläche links. Der Betrag ΔA ist gleich der Differenz zwischen der im wesentlichen der Querschnittsfläche der Bohrung 38 entsprechenden Größe der Endfläche 52 des Kolbens 42 und der Querschnittsfläche des die Bohrung 40 durchsetzenden Abschnitts des Kolbens 42. Die Differenz zwischen den Querschnittsflächen zur Rechten und zur Linken der Flächen 46 und 48 ist ebenfalls gleich dem Betrag ΔA, wie in Fig. 1' durch eine schraffierte Ringfläche ΔA angedeutet.

Ein langgestreckter Drucklaß 54 erstreckt sich über die Länge des Servokolbens 42 zu einem erweiterten Hohlraum 56 hinter dem Kopfteil 44. In dem Durchlaß 54 ist ein seine Durchströmung in einer Richtung sperrendes Rückschlagventil 58 angeordnet. Ein zweiter Durchlaß 60 erstreckt sich lotrecht zum Druchlaß 54 und steht mit diesem sowie mit der Kammer 36 in Strömungsverbindung. Ein im zweiten Durchlaß 60 angeordnetes Rückschlagventil 62 sperrt dessen Durchströmung vom Durchlaß 54 zur Kammer 36. Der Kolben 42 ist durch eine Feder 64 belastet, welche zwischen dem Kopfteil 44 und einer auf Gewindehalterungen 68 und 70 befestigten Federstützplatte 66 angeordnet ist, die Platte 66 ist durch Muttern 72 auf den Gewindehalterungen 68 und 70 festgehalten, so daß die Stellung der Platte 66 und damit die von der Feder 64 ausgeübte Belastung einstellbar sind.

Der Kopfraum 32 ist über eine Verbindungsleitung 76 und einen Durchlaß 74 mit der Kammer 36 des Servoventils 14 strömungsverbunden. Der Servokolben 42 betätigt zwei weitere Ventile für die Regelung des Drucks in der Kammer 36. Das erste dieser Ventile ist ein insgesamt mit 78 bezeichnetes Einlaßventil. Dieses hat eine Kammer 80, welche über ein Staurohr 82 im Einlaß 18 des Hautventils 12, eine Leitung 84, Durchlässe 130, 128 und 90 und ein Rückschlagventil 93 mit dem Einlaß 18 des Hauptventils 12 in Verbindung steht. Das Rückschlagventil 93 ist im Druckentlastungsdurchlaß 90 des Einlaßventils 78 angeordnet und sperrt die Durchströmung des Druchlasses 90 wenn der darin herrschende Druck niedriger ist als der in der Kammer 80 Herrschende. Zum Einlaßventil 78 gehört ferner ein Absperrglied 92, welches durch eine Feder 94 in Anlage an einem Sitz 96 belastet ist. Ein den Sitz 96 durchsetzender Durchlaß 98 verbindet die Kammern 80 und 36 miteinander. Ein sich durch den Durchlaß 98 hindurch erstreckender Ventilstößel 100 greift am Absperrglied 92 an. In eine Gewindebohrung 104 im hervorstehenden Teil 48 des Servokolbens 42 ist ein Betätigungsglied 102 verstellbar eingeschraubt. Durch Herein- oder Herausschrauben des zum Angriff am Ventilstößel 100 bestimmten Betätigungsglieds 102 läßt sich die Stellung des Servokolbens 42 bestimmen, in welcher das Absperrglied 94 über den Stößel 100 von seinem Sitz 96 abgehoben wird.

Das zweite der beiden vorstehend genannten Ventile ist ein insgesamt mit 106 bezeichnetes Entlastungsventil. Zu diesem gehört ein innerhalb der Kammer 36 angeordnetes Absperrglied 108, welches durch eine feder 110 in Anlage an einem Sitz 112 belastet ist. Der Sitz 112 ist in ein Ende eines Durchlasses 114 eingeschraubt und von einem axialen Durchlaß 116 durchsetzt. Der Sitz 112 erstreckt sich außerdem auch durch die die Fläche 46 darstellende Verbreiterung des Servokolbens 42 hindurch. Der Durchlaß 114 ist über eine Leitung 120 und eine die Wandung des Hauptventils 12 durchsetzende Bohrung 122 mit dem Auslaß des Hauptventils strömungsverbunden. Durch Abgriff der Verbreiterung 46 des Servokolbens 42 am Absperrglied 108 läßt sich dieses von seinem Sitz 112 abheben, so daß die Kammer 36 über den Durchlaß 114, die Leitung 120 und die Bohrung 122 zum Auslaß 20 des Hauptventils druckentlastet wird.

Der von der Feder 64 ausgeübten einstellbaren Belastung entgegenwirkende Kräfte werden durch den in der Kammer 36 den Differentialflächenbetrag ΔA und den in der Kammer 124 die Endfläche 52 des Servokolbens 42 beaufschlagenden Druck des Produkts erzeugt. In der in Fig. 1 dargestellten Ausführungsform wird die Druckfläche ΔA des Kolbens 42 in der Kammer 63 in gleicher Richtung mit Druck beaufschlagt wie die Endfläche 52 des Kolbens, so daß die durch den Druck erzeugte Kraft zusammen mit der durch den die Endfläche 52 baaufschlagenden Druck erzeugten Kraft der von der Feder 64 ausgeübten Belastung entgegenwirkt. In der Ausführungsform nach Fig. 2 wird die Druckfläche ΔA des Kolbens 42 in der Kammer 36 in entgegengesetzter Richtung mit Druck beaufschlagt, so daß durch die Druckbeaufschlagung eine mit der von der Feder 64 ausgeübten Belastung in der gleichen Richtung wirksame Kraft erzeugt wird.

Die Kammer 124 steht über Durchlässe 126, 128, 130 und 84 in Strömungsverbindung mit dem Einlaß 18 des Hauptventils 12. Dadurch herrscht im Durchlaß 54 sowie im erweiterten Hohlraum 56 der Druck des Produkts. Als Sicherheitsvorkehrung ist eine Anordnung getroffen, welche im Falle eines Versagens des Servoventils bezüglich der Druckentlastung des Kopfraums 32 einen Druckabbau des Produkts ermöglicht. Falls der Kolben 42 an seiner Bewegung bei dem eingestellten Druck behindert wäre, würde das Rückschalgventil 58 öffnen, so daß sich der in der Kammer 124 herrschende Druck des Produkts über den Durchlaß 54 in den Hohlraum 56 fortpflanzen könnte. Das Rückschlagventil 62 verhindert dabei eine Fortpflanzung des Drucks vom Durchlaß 54 in die Kammer 36. Der Hohlraum 56 ist von einer Dichtung 134 umgeben. Da der Querschnitt des Hohlraums 56 um bis zu 10% kleiner sein kann als der Querschnitt der Bohrung 40, bewirkt ein Druckanstieg um höchstens 10% über den eingestellten Wert das Abheben des Kopfteils 44 vom Kolben 42, worauf der Druck dann die gesamte Fläche des Kopfteils 44, welche beträchtlich größer ist als der Querschnitt des Hohlraums 56, beaufschalgt, so daß das Kopfteil 44 noch weiter vom Kolben 42 abhebt und den Durchlaß 54 dabei vollständig freigibt. Der im Kopfraum 32 herrschende Druck kann dann über die Durchlässe 74 und 60, die Kammer 36 und das Rückschlagventil 62 und am Kopfteil 44 vorüber abgebaut werden. Dadurch hebt sich das Absperrglied 24, so daß der Überdruck in der üblichen Weise über den Auslaß 20 abgebaut werden kann. Das Rückschlagventil 62 verhindert dabei, daß sich der Einlaßdruck von der Kammer 124 über den Durchlaß 54 in den Kopfraum 32 fortpflanzt. Die Einstellung der Feder 64 bestimmt sowohl den Ansprechdruck des Servoventils als auch den Ansprechdruck für die vorstehend beschriebene Sicherheitseinrichtung.

Im praktischen Gebrauch der in Fig. 1 und 1' dargestellten Ventilanordnung steht das Hauptventil 12 zunächst unter Druckausgleich, das Absperrglied 24 befindet sich in Anlage an seinem Sitz 22, und das Einlaßventil 78 sowie das Abblasventil 106 sind geschlossen. Bei einem Anstieg des Drucks des Produkts am Einlaß 18 des Hauptventils beaufschlagt dieser Druck die Endfläche 52 des Kolbens 42. Übersteigt der Durck des Produkts dabei einen vorbestimmten Wert, so bewegt sich der Servokolben 42, beaufschlaft von dem in den Kammern 124 und 36 herrschenden Druck, im Sinne einer Kompression der Feder 64. Dabei kommt zunächst das Absperrglied 92 in Anlage in sienem Sitz 96, um die weitere Druckspeisung der Kammer 36 zu unterbinden, und anschließend greift das Teil 46 des Servokolbens 42 am Absperrglied 108 an und hebt dieses von seinem Sitz 112, so daß der in der Kammer 36 herrschende Druck über das Abblasventil 106 zum Auslaß 20 des Hauptventils 12 entweichen kann. Der im Kopfraum 32 herrschende Druck wird ebenfalls abgebaut, wodurch sich die auf die effektive druckbeaufschlagte Fläche ΔA ausgeübt Kraft und damit auch die den Servokolben 42 nach links gegen die Feder 64 zu bewegen trachtende Kraft verringert. Dabei reicht dann die Kraft der Feder 64 aus, den Kolben 42 in Richtung auf seine Ausgangsstellung zu verschieben, so daß das Abblasventil 106 wieder schließt.

Der im Laufe dieser Vorgänge eintretende Druckabbau in der Kammer 36 und im Kopfraum 32 bewirkt, daß sich das Absperrglied 24 um ein kleines Stück von seinem Sitz 22 heben kann, um die Strömung des Produkts vom Einlaß 18 zum Auslaß freizugeben, wobei das Servoventil 14 jedoch nicht von dem Produkt durchströmt wird. Wird das Absperrglied 24 nicht weit genug angehoben, um den Druck des Produkts wirksam abzubauen, so wiederholen sich die vorstehend beschriebenen Bewegungen des Servokolbens 42. Auf diese Weise ergibt sich ein modulierender oder proportionaler Abbau des Drucks des Produkts.

Solange der Druck des Produkts niedriger ist als der eingestellte Wert, bewegt die Feder 64 den Servokolben 42 nach rechts, so daß das Betätigungsglied 102 am Ventilstößel 100 angreift und über diesen das Absperrglied 92 von seinem Sitz 96 hebt, um dem Druck des Produkts Zutritt zur Kammer 36 zu gewähren. Durch den sich dabei ergebenden Druckanstieg vergrößert sich die auf die effektive druckbeaufschlagte Fläche ΔA einwirkende Kraft so weit, daß das Betätigungsglied 102 vom Ventilstößel 100 abhebt und das Einlaßventil 78 dementsprechend schließt. Der in der Kammer 36 herrschende erhöhte Druck pflanzt sich in den Kopfraum 32 fort, so daß sich das Absperrglied 24 um ein Stück abwärts auf seinen Sitz 22 zu bewegt, um die Durchströmung des Hauptventils 12 vom Einlaß 18 zum Auslaß 20 zu drosseln. Bei nicht ausreichender Drosselung der Durchströmung wiederholen sich die vorstehend beschriebenen Vorgänge.

Bei jedem der beschriebenen Vorgänge wird jeweils lediglich der im Kopfraum 32 herrschende Druck des Produkts abgebaut. Das Servoventil 14 wird daher nur von einer sehr kleinen Menge des Produkts durchströmt, so daß der Gefahr von Betriebsstörungen des Servoventils 14 durch gegebenenfalls im Produkt mitgeführte Verunreinigungen vorgebeugt ist.

In Fig. 1 ist der Servokolben 42 in einer Mittelstellung zwischen den vorstehend beschriebenen Betätigungsstellungen gezeigt. Dabei sind sowohl das Einlaßventil 78 als auch das Abblasventil 106 geschlossen, so daß ein Neutralzustand besteht, in welchem der im Kopfraum 32 herrschende Druck des Produkts das Absperrglied 24 auf sienem Sitz hält, das Servoventil 14 jedoch nicht von dem Produkt durchströmt ist.

Zu der Ventilanordnung 10 gehört ferner ein Prüfdruckventil 138 mit einem Einlaß 140 für die Zuleitung eines Prüfdrucks und einer Kammer 142, welche mit dem Einlaß 140 und einem Auslaß 144 in Strömungsverbindung bringbar ist. Ein weiterer Auslaß 146 der Kammer 142 steht über einen Drucklaß 148 mit der Kammer 36 in Strömungsverbindung. Zwischen dem Einlaß 140, dem ersten Auslaß 144 und dem zweiten Auslaß 146 ist ein mit einem Absperrglied 151 verbundener Kolben 150 verschieblich in der Kammer 142 geführt. Ein weiterer von der Kammer 142 ausgehender Durchlaß 152 steht über einen weiteren Auslaß 154 in Strömungsverbindung mit dem Durchlaß 130. Im Bereich des weiteren Auslasses 154 ist ein als Rückschlagventil wirkendes Umschaltventil 156 angeordnet.

Solange der im Kopfraum 32 und in der Kammer 36 herrschende Druck höher ist als der Atmosphärische, hält der Kolben 150 das Absperrglied 151 in abdichtender Anlage am ersten Auslaß 144. Dabei ist dann das Umschaltventil 156 von dem im Durchlaß 130 herrschenden Druck als auch von dem am Einlaß 140 herrschenden Druck beaufschalgt. Für eine Funktionsprüfung der Servoventils wird ein Prüfdruck an den Einlaß 140 gelegt. Solange der Prüfdruck niedriger ist als der im Kopfraum 32 herrschende Druck, halten das Umschaltventil 156 und das Absperrglied 151 des Kolbens 150 den dritten Auslaß 154 bzw. den ersten Auslaß 144 geschlossen, so daß im Kopfraum 32 sowie in der Kammer 36 im wesentlichen der Druck des Produkts erhalten bleibt. Steigt der Prüfdruck dann bis an den Druck des Produkts oder über diesen hinaus an, wird das als Rückschlagventil wirkende Umschaltventil 156 vom Auslaß 154 abgehoben, um das Prüfventil 138 gegenüber dem Druck des Produkts abzusperren. Da der Druck des Produkts zu diesem Zeitpunkt unter dem eingestellten Ansprechdruck des Servoventils 14 liegt, befindet sich der Servokolben 42 in seiner gegenüber der in Fig. 1 gezeigten nach rechts versetzten Endstellung, in welcher das Einlaßventil 78 über das Betätigungsglied 102 und den Stößel 100 offengehalten ist, so daß der Prüfdruck über das Einlaßventil in die Kammer 36 gelangt und sich von dieser in den Kopfraum 32 fortpflanzt. Bei weiterem Anstieg des Prüfdrucks bis auf den eingestllten Ansprechdruck wird der Servokolben 42 nach links in Fig. 1 bewegt, um das Einlaßventil 78 zu schließen und das Abblasventil 106 zu öffnen, so daß der im Kopfraum 32 herrschende Druck abgebaut wird. Sinkt dabei der im Kopfraum herrschende Druck auf etwa 80% des an den Einlaß 140 gelegten Prüfdrucks ab, dann bewegt sich der Kolben 150 mit dem Absperrglied 151 vom ersten Auslaß 144 weg, so daß der Prüfdruck ins Freie entweichen kann. Der Ansprechdruck des Kolbens 150 mit dem Absperrglied 151 ist dabei abhängig von dem Verhältnis seiner druckbeaufschalgten Flächen, braucht also nicht unbedingt 80% des Prüfdrucks zu betragen. Der Servokolben 42 kehrt nun in seine Ausgangsstellung zurück, so daß das Einlaßventil schließt und der Druck im Kopfraum 32 wieder ansteigt bevor das Hauptventil 12 öffnet. Das Prüfventil 138 ermöglicht so eine Funktionsprüfung des Servoventils 14 ohne Betätigung des Hauptventils. Soll dabei auch die Funktion des Hauptventils geprüft werden, so ist dazu lediglich der erste Auslaß 144 zu verschließen.

Herrscht am Auslaß 20 des Hauptventils 12 ein höherer Druck als am Einlaß 18 desselben, dann bewirkt die Druckbeaufschlagung des Absperrglieds 24 im Bereich des Sitzes 22 und um diesen herum, daß sich das Absperrglied 24 hebt und die Strömung des Produkts vom Auslaß 20 zum Einlakß 18 freigibt, sofern nicht der Einlaßdruck im Kopfraum 32 durch den nunmehr höheren Auslaßdruck ersetzt wird. Dies geschieht jedoch in der Weise, daß sich der im Auslaß 20 herrschende Druck über die Bohrung 122 und die Durchlässe 120 und 114 fortpflanzt, so daß das Absperrglied 108 von seinem Sitz abhebt und dem Druck den Weg über die Kammer 36 und den Durchlaß 74 in den Kopfraum 32 freigibt. Die beiden Rückschlagventile 93 und 58 verhindern dabei das Entweichen des höheren Drucks aus der Kammer 36 über die Leitung 84 zum Einlaß 18 des Hauptventils 12.

Eine in Fig. 2 und 2' dargestellte Ventilanordnung 10' ist als Schnellablaßventil oder als servobetätigtes Vollstrom-Überdruckventil ausgebildet. Die Ventilanordnung 10' hat im wesentlichen den gleichen Aufbau wie die in Fig. 1 und 1' dargestellte Ventilanordnung 10. Gleiche und einander entsprechende Teile sind daher mit den gleichen Bezugszeichen bezeichnet. Die durchbeaufschalgte Differentialfläche $\Delta A'$ der Ventilanordnung 10' ist anders herum ausgerichtet als im Falle der modulierenden Ventilanordnung 10, da die Bohrung 40' hier einen kleineren Durchmesser hat als die Bohrung 38, so daß der die Differentialfläche $\Delta A'$ beaufschlagende Druck eine nach rechts gerichtete Nettokraft erzeugt. Diese Kraft wirkt in der gleichen Richtung wie die von der Feder 64 ausgeübte Belastung und entgegengesetzt der durch den Behälterdruck auf die Endfläche 52 ausgeübten Kraft. Beim Ansteigen des Behälterdrucks auf den eingestellten Wert bewegt sich der Kolben 42 nach links und bewirkt dabei eine Verringerung des Drucks in der Kammer 36. Dadurch verringert sich auch die durch die Druckbeaufschlagung der Differentialfläche $\Delta A'$ erzeugte, nach rechts gerichtete Kraft, was eine weitere Bewegung des Kolbens 42 nach links ermöglicht. Auf diese Weise bewegt sich der Kolben relativ schnell bis in seine linksseitige Endstellung, wodurch der Kopfraum 32 vollständig druckentlastet wird, so daß das Hauptventil 12 vollständig öffnen kann. Diese Wirkungsweise der Ventilanordnung 10' kann als Schnellablaß oder Vollstrom-Überdruckentlastung bezeichnet werden.

**Patentansprüche**

1. Überdruckventil mit Servobetätigung, umfassend ein Hauptventil (12) mit einem einen Einlaß (18) und einen Auslaß (20) aufweisenden Gehäuse (16), einer in dem Gehäuse gebildeten Kammer (32) und einem zwischen Einlaß (18) und Auslaß (20) verschieblich in der Kammer (32) geführten Kolben (24) zum Steuern der Strömung vom Einlaß zum Auslaß, ein Servoventil (14) mit einer Kolbenkammer (36) und einem verschieblich in dieser geführten, federgestützten Differential-Servokolben (42), einer, die Kolbenkammer (36) mit der Kammer (32) des Hauptventils (12) verbindenden Leitung (74, 76) und einer ein erstes Ende des Servokolbens (42) drucküberttragend mit dem Einlaß (18) des Hauptventils (12) verbindende zweite Leitung (82, 84, 126, 128, 130), gekennzeichnet durch ein in dem Servoventil (14) angeordnetes Einlaßventil (78), eine das Einlaßventil (78) drucküberttragend mit dem Einlaß (18) des Hauptventils (12) verbindende dritte Leitung (82, 84, 90, 128, 130), ein für die druckübertragende Verbindung des Einlaßventiles (78) mit der Kolbenkammer (36) betätigbare Einrichtung (100), ein am Servokolben (42) angeordnetes Betätigungsglied (102) zum Betätigen des Einlaßventiles (78) über die betätigbare Einrichtung (100), und durch ein Ablaßventil (106) in der Kolbenkammer (36), welches einen mit einem Auslaß (20) strömungsverbundenen Durchlaß (114, 116) und ein an den Servokolben (42) angrenzendes Absperrglied (108) umfaßt, das beweglich in dem Ablaßventil (106) angeordnet und durch den Servokolben (42) in öffnungsrichtung betätigbar ist, wobei das Absperrglied (108) durchu eine Federeinrichtung (110) in seine Schließstellung belastet ist.

2. Überdruckventil nach Anspruch 1, gekennzeichnet durch einen Servokolben (42) durchsetzenden Durchlaß (54), welcher an einem Ende (52) drucküberttragend mit dem Einlaß (18) des Hauptventils und an seinem zweiten Ende drucküberttragend mit einer verbreiterten Fläche (56) des Servokolbens (42) verbunden ist.

3. Überdruckventil nach einem der Ansprüche 1 oder 2, dadurch gekennzeichnet, daß der den Servokolben (42) durchsetzende Durchlaß an seinem zweiten Ende mit einem Entlastungsdurchlaß strömungsverbunden ist, in welchem Einrichtungen (44) zum Ablassen von einen vorbestimmten Wert übersteigenden Druck aus dem Durchlaß angeorndet sind.

4. Überdruckventil nach einem der Ansprüche 1 bis 3, gekennzeichnet durch ein Prüfventil (138) mit einem Gehäuse, einem im Gehäuse geformten Einlaß sowie mit der Kolbenkammer (36) des Servoventils (14) verbundenen ersten Auslaß (154), einem zwischen dem Einlaß und dem ersten Auslaß verschieblich im Gehäuse gelagerten Absperrglied (150, 151), einem drucküberttragenden mit dem Einlaß und mit einer zweiten Seite des Servobolbens (42) verbundenen zweiten Auslaß (146) und einem dem Einlaß und dem ersten Auslaß hin und her beweglich im Gehäuse des Prüfventils gelagerten Umschaltventil (156).

5. Überdruckventil nach einem der Ansprüche 1 bis 4, gekennzeichnet durch einen Abblasdurchlaß (144) im Gehäuse des Prüfventils (138) zunächst dem Absperrglied (150, 151).

6. Überdruckventil nach einem der Ansprüche 1 bis 5, dadurch gekennzeichnet, daß die dritte Leitung ein Rückschlagventil (58, 93) aufweist.

7. Überdruckventil nach einem der Ansprüche 1 bis 6, dadurch gekennzeichnet, daß der Differential-Servokolben (42) eine erste und eine zweite druckbeaufschlagte Fläche (52, 56) aufweist, daß die zweite druckbeaufschlagte Fläche in der Kolbenkammer (36) angeordnet ist, daß die erste druckbeaufschlagte Fläche am ersten Ende des Servokolbens ausgebildet ist und daß die zweite druckbeaufschlagte Fläche größer ist bzw. einen größeren Durchmesser hat als die erste druckbeaufschlagte Fläche.

8. Überdruckventil nach einem der Ansprüche 1 bis 6, dadurch gekennzeichnet, daß der Servokolben (42) eine erste und eine zweite druckbeaufschlagte Fläche (52, 56) hat, von denen die zweite in der Kolbenkammer (36) und die erste am ersten Ende des Servokolbens ausgebildet ist, und daß die zweite druckbeaufschlagte Fläche kleiner ist bzw. einen kleineren Durchmesser hat als die erste druckbeaufschlagte Fläche.

## Revendications

1. Soupape de surpression avec servocommande, comprenant une soupape principale (12) avec une cage (16) présentant une entrée (18) et une sortie (20), une chambre (32) conformée dans la cage et un piston (24) guidé de manière mobile dans la chambre (32) entre l'entrée (18) et la sortie (20) et destiné à commander l'écoulement de l'entrée vers la sortie, une servo-soupape (14) avec une chambre de piston (36) et un servo-piston différentiel (42) guidé de manière mobile dans ladite chambre de piston et commandé par ressort, une conduite (74, 76) reliant la chambre de piston (36) à la chambre (32) de la soupape principale (12) et une seconde conduite (82, 84, 126, 128, 130) reliant, avec transmission de pression, une première extrémité du servo-piston (42) à l'entrée (18) de la soupape principale (12), caractérisée en ce qu'elle comprend une soupape d'admission (78) disposée dans la servo-soupape (14), une troisième conduite (82, 84, 90, 128, 130) reliant, avec transmission de pression, la soupape d'admission (78) à l'entrée (18) de la soupape principale (12), un dispositif (100) pouvant être actionné pour la liaison avec transmission de pression entre la soupape d'admission (78) et la chambre de piston (36), un organe de manoeuvre (102) monté sur le servo-piston (42) et destiné à actionner la soupape d'admission (78) par l'intermédiaire du poussoir de soupape (100), ainsi qu'une soupape de décharge (106) dans la chambre de piston (36), comprenant une section de passage (114, 116) communiquant avec une sortie (20) et un organe d'arrêt (108) contigu du servo-piston (42) qui est disposé de manière mobile dans la soupape de décharge (106) et actionnable par le servo-piston (42) dans le sens de l'ouverture, l'organe d'arrêt (108) étant chargé dans sa position de fermeture par un dispositif à ressort (110).

2. Soupape de surpression selon la revendication 1, caractérisée en ce qu'elle comprend un passage (54) traversant un servo-piston (42), dont l'une des extrémités (52) est reliée, avec transmission de pression, à l'entrée (18) de la soupape principale et dont l'autre extrémité communique, avec transmission de pression, avec la surface élargie (56) du servo-piston (42).

3. Soupape de supression selon l'une des revendications 1 ou 2, caractérisée en ce que le passage traversant le servo-piston (42) établit à sa seconde extrémité une communication d'écoulement avec un passage de détente dans lequel sont insérés des dispositifs (44) pour l'évacuation dans le passage d'une pression dépassant une valeur prédéterminée.

4. Soupape de surpression selon l'une des revendications 1 à 3, caractérisée en ce qu'elle comprend une soupape d'essai (138) avec une cage, une entrée conformée dans la cage ainsi qu'une première sortie (154) reliée à la chambre de piston (36) de la servo-soupape (14), un organe d'arrêt (150, 151) monté de manière mobile dans la cage, entre l'entrée et la première sortie, une seconde sortie (146) de transmission de pression reliée à l'entrée et à un second côté du servo-piston (42), et une soupape d'inversion (156) montée de manière mobile entre l'entrée et la première sortie dans la cage de la soupape d'essai.

5. Soupape de surpression selon l'une des revendications 1 à 4, caractérisée en ce qu'elle comprend un passage d'évacuation (144) dans la cage de la soupape d'essai (138) à proximité de l'organe d'arrêt (150, 151).

6. Soupape de surpression selon l'une des revendications 1 à 5, caractérisée en ce que la troisième conduite comprend un clapet antiretour (58, 93).

7. Soupape de surpression selon l'une des revendications 1 à 6, caractérisée en ce que le servo-piston différentiel (42) comprend une première et une seconde surface (52, 56) soumises à la pression; que la seconde surface soumise à la pression est disposée dans la chambre de piston (36); que la première surface soumise à la pression est conformée à la première extrémité du servo-piston; et que la seconde surface soumise à la pression est plus grande et respectivement présente un diamètre plus grand que la première surface soumise à la pression.

8. Soupape de surpression selon l'une des revendications 1 à 6, caractérisée en ce que le servo-piston (42) comprend une première et une seconde surfaces (52, 56) soumises à la pression dont la seconde est conformée dans la chambre de piston (36) et la première, à la première extrémité du servo-piston; et que la seconde surface soumise à la pression est plus petite et respectivement présente un diamètre plus faible que la première surface soumise à la pression.

## Claims

1. Excess-pressure valve with servo-actuation, comprising a main valve (12) with a housing (16) which has an inlet (18) and an outlet (20), with a chamber (32) which is constructed in the housing, and with a piston (24) which is guided slidably in the chamber (32), between inlet (18) and outlet (20), for controlling the flow from the inlet to the outlet, a servo-valve (14) with a piston chamber (36) and with a differential servo-piston (42) which is guided slidably in the said piston chamber and is spring-supported, with a pipe (74, 76) which connects the piston chamber (36) with the chamber (32) of the main valve (12), and with a second pipe (82, 84, 126, 128, 130) which pressure-transmittingly connects a first end of the servo-piston (42) with the inlet (18) of the main valve (12), characterised by an intake valve (78) which is arranged in the servo-valve (14), a thrid pipe (82, 84, 90, 128, 130) which pressure-transmittingly connects the intake valve (78) with the inlet (18) of the main valve (12), a means (100) which is actuatable for the pressure-transmitting connection of the intake valve (78) with the piston chamber (36), an actuating member (102) which is arranged on the servo-piston (42) for actuating the intake valve (78) via the valve tappet (100), and by a discharge valve (106) in the piston chamber (36), this valve comprising a throughpassage (114, 116) which is in flow-connection with an outlet (20), and also comprising a blocking member (108) which is adjacent to the servo-piston (42) and which is arranged movably in the discharge valve (106) and is actuatable in the direction of opening, by means of the servo-piston (42), the blocking member (108) being loaded by a spring device (110) in its closed position.

2. Excess-pressure valve according to claim 1, characterised by a throughpassage (54) which passes through a servo-piston (42) and whcih is connected at one end (52) pressure-transmittingly with the inlet (18) of the main valve and at its second end is connected pressure-transmittingly with a widened surface (56) of the servo-piston (42).

3. Excess-pressure valve according to any one of the claims 1 or 2, characterised in that the throughpassage which passes through the servo-piston (42) is in flow-connection at its second end with a relief throughpassage, in which are arranged devices (44) for the discharging of a pressure out of the throughpassage when the said pressure exceeds a predetermined value.

4. Excess-pressure valve according to any one of the claims 1 to 3, characterised by a test valve (138) with a housing, with an inlet which is connected in the housing, and with a first outlet (154) which is connected with the piston chamber (36) of the servo-valve (14), with a blocking member (150, 151) which is mounted slidably in the housing, between the inlet and the first outlet, with a second outlet (146) which is connected pressure-transmittingly with the inlet and with a second side of the servo-piston (42), and with a reversing-valve (156) which is mounted in the housing of the test valve in such a manner as to be movable to and fro towards the inlet and towards the first outlet.

5. Excess-pressure valve according to any one of the claims 1 to 4, characterised by a discharge throughpassage (144) in the housing of the test valve (138) next to the blocking member (150, 151).

6. Excess-pressure valve according to any one of the claims 1 to 5, characterised in that the third pipe has a non-return valve (58, 93).

7. Excess-pressure valve according to any one of the claims 1 to 6, characterised in that the differential servo-piston (42) has a first and a second surface (52, 56) which are impacted upon by pressure, that the second pressure-impacted surface is arranged in the piston chamber (36), that the first pressure-impacted surface is constructed on the first end of the servo-piston, and that the second pressure-impacted surface is larger and/or has a greater diameter than the first pressure-impacted surface.

8. Excess-pressure valve according to any one of the claims 1 to 6, characterised in that the servo-piston (42) has a first and a second surface (52, 56) which are impacted upon by pressure, whereof the second surface is constructed in the piston chamber (36) and the first surface is constructed at the first end of the servo-piston, and that the second pressure-impacted surface is smaller and/or has a smaller diameter than the first pressure-impacted surface.

FIG. 1

FIG. 1'

EP 0 139 149 B1

ZUM TANK

# FIG. 2

FIG. 2'

ZUM TANK

EP 0 139 149 B1

2

FIG. 4

FIG. 3

EP 0 139 149 B1

# FIG.5

FIG.6

FIG.8

FIG.9

EP 0 139 149 B1

# FIG. 7